# EUROPÄISCHE PATENTSCHRIFT

(11) **EP 3 135 566 B1**
(45) Veröffentlichungstag und Bekanntmachung des Hinweises auf die Patenterteilung: **25.11.2020**
(21) Anmeldenummer: 15182959.5
(22) Anmeldetag: 28.08.2015
(51) Int. Cl.: B62D 27/02

(54) **FAHRZEUGLEICHTBAUSTRUKTUR IN FLEXIBLER FERTIGUNG**
VEHICLE LIGHTWEIGHT CONSTRUCTION STRUCTURE WITH FLEXIBLE MANUFACTURING
STRUCTURE DE CONSTRUCTION LEGERE DE VEHICULE AUTOMOBILE DE FACTURE SOUPLE

(43) Veröffentlichungstag der Anmeldung: 01.03.2017
(73) Patentinhaber: EDAG Engineering GmbH, 65205 Wiesbaden (DE); Fraunhofer-Gesellschaft zur Förderung der angewandten Forschung e.V., 80686 München (DE); Concept Laser GmbH, 96215 Lichtenfels (DE); BLM S.p.A., I-22063 Cantu (IT)
(72) Erfinder: Dr.-Ing. Hillebrecht, Martin, 36100 Petersberg (DE); Schmidt, Michael, 36103 Flieden (DE); Fritzsche, Eric, 36039 Fulda (DE); Dr.-Ing. Breitenbach, Frank, 36093 Künzell (DE); Prof. Dr.-Ing. Emmelmann, Claus, 21220 Seevetal-Horst (DE); Herzog, Frank, 96215 Lichtenfels (DE); Raso, Sergio, 10137 Torino (IT)
(74) Vertreter: Isarpatent

(56) Entgegenhaltungen:
- EP-A2- 0 146 716
- WO-A1-00/61424
- WO-A1-95/30563
- WO-A1-2005/061311
- WO-A1-2015/111706
- JP-A- H0 633 922
- JP-A- H05 305 878
- JP-A- 2006 272 393
- US-A1- 2002 050 064
- US-A1- 2011 061 591

## Beschreibung

Die Erfindung betrifft eine Fahrzeugleichtbaustruktur, insbesondere eine funktionsintegrierte, Hybridfahrzeugleichtbaustruktur in flexibler Fertigung. Die erfindungsgemäße Bauweise kann bei Fahrzeugen, insbesondere Kraftfahrzeugen Anwendung finden. Grundsätzlich lässt sich die dargestellte Bauweise und das Fertigungskonzept auch auf Karosserien oder Komponenten für schwere und leichte Nutzfahrzeuge, mobile Arbeitsmaschinen oder allgemein für Space-Frame-Strukturen oder für Stab-Knoten-Tragwerke für Maschinen und Anlagen nutzen und vorteilhaft auf die Bereiche Personenkraftfahrzeuge, Nutzfahrzeuge, Schienenfahrzeuge, Maschinenbau, Flugzeug und Raumfahrtechnik, Medizin usw. anwenden.

Aus dem Stand der Technik sind Karosserien in Space-Frame-Bauweise, d. h. in einer Gitterrahmen-Bauweise, bekannt. Verschieden geformte Strangpress- und Blechprofile können dabei die Rahmenstruktur bilden, die durch Knoten, wie z. B. Gussknoten an hochbeanspruchten Stellen verbunden werden.

Aus der EP 2 617 629 A1 ist ein Karosserieknoten zum Verbinden schalenförmiger Karosseriestrukturen eines Fahrzeugs bekannt. Eine Basiswandstruktur und eine Verstärkungsrippe des Karosserieknotens werden gemeinsam in einem Gießverfahren als dünnwandiger Metallgusskörper geformt. Die US 2011/061591 A1 beschreibt ein Herstellungsverfahren sowie eine Vorrichtung zur generativen Herstellung eines dreidimensionalen Bauteils. Mit dem Verfahren und der Vorrichtung können Fahrzeugbauteile generativ gefertigt werden.

Die EP 2 801 512 A1 offenbart eine Verbundstruktur mit einer Basisstruktur, die einen Karosserieknoten einer Fahrzeugkarosserie bildet, und einer generativ geformten Funktionsstruktur, die den Karosserieknoten bzw. die Basisstruktur mechanisch verstärkt, so dass insgesamt eine hoch belastbare Verbundstruktur mit geringem Gewicht erhalten wird. Die EP 0 146 716 A1 zeigt einen Karosserieknoten zum Verbinden von Karosseriestrukturen eines Fahrzeugs, wobei der Karosserieknoten einen ersten, zweiten und dritten Verbindungsflansch für eine Verbindung mit der Karosseriestruktur und eine Verbindungsstruktur, welche die Verbindungsflasche starr miteinander verbindet und mit den diesen einen monolithischen Körper bildet. Generative Fertigungsverfahren als solche sind dem Fachmann bekannt, wie z. B. laseradditive Fertigungsverfahren (LAM), insbesondere selektives Laserschmelzen (SLM) und selektives Lasersintern (SLS).

Der Erfindung liegt die Aufgabe zugrunde, einen Fahrzeugknoten, eine Karosseriesektion einer Karosserie und ein Herstellungsverfahren für den Karosserieknoten oder die Karosseriesektion anzugeben, wobei der Karosserieknoten oder die Karosseriesektion strukturell, insbesondere hinsichtlich eines Leichtbaus und einer Stabilität verbessert werden soll.

Die Aufgabe wird mit den Gegenständen der unabhängigen und nebengeordneten Ansprüche gelöst. Vorteilhafte Weiterentwicklungen ergeben sich aus den abhängigen Ansprüchen, der Beschreibung und den Figuren.

Die Erfindung geht von einem Karosserieknoten zum Verbinden von, insbesondere schalenförmigen Karosseriestrukturen eines Fahrzeugs, insbesondere eines Kraftfahrzeugs aus. Der Karosserieknoten ist vorzugsweise Teil einer selbsttragenden Struktur eines Fahrzeugs, insbesondere in einer Space-Frame- oder Stabwerkbauweise. Als schalenförmige Karosseriestruktur wird eine Karosseriestruktur angesehen, die eine dünnwandige Struktur, wie z.B. eine Wand oder ein Blech, aufweist, die im Querschnitt, wie zum Beispiel im Querschnitt quer zur Längsrichtung der Karosseriestruktur, mindestens einmal, wie zum Beispiel mehrfach, abgewinkelt oder gekrümmt ist und/oder einen geschlossenen oder offenen Querschnitt aufweist. Der Karosserieknoten ist angepasst, Kräfte und Momente der an ihm befestigten oder mit ihm verbundenen Karosseriestrukturen aufzunehmen. Der Karosserieknoten verbindet die an ihm befestigten Karosseriestrukturen z. B. starr. Die beispielsweise schalenförmigen Karosseriestrukturen können vorzugsweise länglich, aus Sicht der technischen Mechanik idealisiert z. B. als Stäbe oder Balken betrachtet werden. Wenigstens eine, mehrere oder alle der hierin genannten Karosseriestrukturen können schalen- oder kastenförmig ausgestaltet sein. Unter einer kastenförmigen Karosseriestruktur, die ein Spezialfall einer schalenförmigen Karosseriestruktur ist, wird ein z.B. rohrförmiges oder prismatisches, insbesondere dünnwandiges, Hohlprofil verstanden, welches einen Hohlraum zumindest über den größten Teil seines Umfangs umgibt. Obwohl die schalen- oder kastenförmige Karosseriestruktur vorzugsweise einen geschlossenen Querschnitt aufweist, kann sie grundsätzlich auch einen offenen Querschnitt aufweisen, wobei die schalen- oder kastenförmige Karosseriestruktur den Hohlraum an mindestens drei, vorzugsweise vier Seiten einfassen kann. Die Karosseriestruktur kann über ihren Umfang ein- oder mehrfach abgewinkelt sein. Allgemein kann die Karosseriestruktur regelmäßig oder unregelmäßig prismatisch oder rohrförmig geformt sein. Durch diese Formgebung, insbesondere die Ausgestaltung der Karosseriestruktur als schalen- oder kastenförmiger Hohlkörper, weist die Karosseriestruktur eine hohe Torsions- und Verwindungssteifigkeit auf.

Wenigstens eine, mehrere oder jede der Karosseriestrukturen können ein Strangpressprofil oder ein aus einem oder mehreren Blechen zusammengesetztes Profil sein. Vorzugsweise bildet ein solches Profil die genannte schalen- oder kastenförmige Karosseriestruktur. Alternativ kann die schalen- oder kastenförmige Karosseriestruktur mittels eines generativen Fertigungsverfahrens oder eines anderen Urformverfahrens, wie z. B. einem Gießverfahren, hergestellt sein. Der Vollständigkeit halber sei erwähnt, dass nicht jede an den Karosserieknoten befestigte Karosseriestruktur in der identischen Bauweise hergestellt sein muss. Beispielsweise können eine Karosseriestruktur in einer der genannten Bauweisen und eine andere Karosseriestruktur in einer anderen der genannten Bauweisen hergestellt sein.

Der Karosserieknoten weist einen ersten Verbindungsflansch für eine Verbindung mit einer ersten Karosseriestruktur und wenigstens einen weiteren Verbindungsflansch für eine Verbindung mit wenigstens einer weiteren Karosseriestruktur auf. Insbesondere weist der Karosserieknoten einen ersten Verbindungsflansch für eine Verbindung mit einer ersten Karosseriestruktur, einen zweiten Verbindungsflansch für eine Verbindung mit einer zweiten Karosseriestruktur und einen dritten Verbindungsflansch für die Verbindung mit einer dritten Karosseriestruktur auf. In diesem Zusammenhang wird unter Verbindung auch Befestigung umfasst, d. h. dass der Verbindungsflansch für die Befestigung mit der jeweiligen Karosseriestruktur vorgesehen ist. Optional kann der Karosserieknoten einen vierten oder sogar fünften oder allgemein einen n-ten Verbindungsflansch für eine Verbindung mit einer vierten, fünften oder n-ten Karosseriestruktur aufweisen. Die Anzahl der Verbindungsflansche ergibt sich aus dem Erfordernis, wie viele Karosseriestrukturen mit dem Karosserieknoten verbunden werden sollen.

Der Karosserieknoten umfasst eine Verbindungsstruktur, welche die Verbindungsflansche des Karosserieknotens starr miteinander verbindet. Bevorzugt bildet die Verbindungstruktur zusammen mit den Verbindungsflanschen des Karosserieknotens einen monolithischen, d. h. einteiligen Körper, der vorteilhafter Weise als ein einzelner Körper handhabbar ist. Grundsätzlich könnte der Karosserieknoten auch aus mehreren Teilen, wie z. B. Guss- und/oder Blechteilen zusammengesetzt sein, die starr miteinander verbunden sind und dadurch ebenfalls eine einzeln handhabbare Einheit bilden.

In der Erfindung ist der Karosserieknoten generativ, mittels eines laseradditiven Herstellungsverfahrens, wie zum Beispiele eines selektiven Laserschmelzverfahrens oder eines selektiven Lasersinterverfahrens, hergestellt worden oder hergestellt Für die Erzeugung des Karosserieknotens kommt grundsätzlich jedes generative Fertigungsverfahren in Frage. Als Synonym für das generative Formen bzw. Fertigen kann auch von einem additiven Formen bzw. Fertigen gesprochen werden. Bevorzugt wird der gesamte Karosserieknoten einschließlich Verbindungsstruktur und der Verbindungsflansche mittels eines Lasers generativ bzw. additiv geformt. Die laseradditive Fertigung umfasst die Verfahren "Direkt Metal Laser Sintering" (DMLS), "Selective Laser Melting" (SLM), "Laser Cusing", "Selective Laser Sintering" (SLS) oder Lasergenerieren. Dieses Verfahren bzw. diese Verfahren werden bereits industriell genutzt, um in einem metallischen Pulverbett belastbare Funktionsbauteile werkzeuglos herzustellen. Alternativ zu den Pulverbettverfahren kommt Laserpulverauftragsschweißen für die generative Fertigung in Frage. Die Werkstoffpalette umfasst insbesondere metallische Werkstoffe, wie z. B. Eisen- bzw. Stahl-, Aluminium und Titanlegierungen, ist aber nicht darauf beschränkt da die hierfür bereitstellbaren Werkstoffe bzw. Legierungen ständig erweitert werden. Alternativ kann der Strukturknoten mittels generativer Fertigung aus einem Kunststoffwerkstoff, insbesondere einem strukturell relevanten Kunststoffwerkstoff, mit oder ohne Faserverstärkung hergestellt sein.

Grundlagen des Verfahrens ist ein 3D-CAD Modell des herzustellenden Bauteils, insbesondere des Strukturknotens. Das herzustellende Bauteil wird in einem virtuellen Bauraum platziert, in einzelne Schichten zerlegt und als Schichtinformation gespeichert. Typische Schichtdicken liegen abhängig vom Werkstoff und der Herstellungsanlage z. B. zwischen 30 und 60 Mikrometer, können aber auch darüber bzw. darunter liegen. Der eigentliche Fertigungsprozess kann z. B. drei grundlegende, sich iterativ bis zur Bauteilfertigstellung wiederholende Schritte umfassen. In einem ersten Schritt wird eine dünne Pulverschicht entsprechend der aktuellen Bauteilschicht durch den Laser aufgeschmolzen. In einem zweiten Schritt wird anschließend das Pulverbett um eine Schichtstärke abgesenkt und in einem dritten Schritt eine weitere Pulverschicht auf die durch den Laser verfestige Bauteilschicht aufgetragen. Je nach Bauteilgröße kann dieser Zyklus mehrere tausendmal bis zur Fertigstellung durchlaufen werden. Nicht aufgeschmolzenes Pulver kann für spätere Bauprozesse nahezu gänzlich wiederverwendet werden. Die mit dem Verfahren erreichten Dichten und Festigkeiten des hergestellten Bauteils sind mit den Kennwerten von konventionellen Gusswerkstoffen vergleichbar. Gegenüber konventionellen Fertigungsverfahren bieten additive Verfahren, wie die laseradditive Fertigung, aufgrund der ihnen eigenen hohen Geometriefreiheiten das Potential, neue Konstruktionsansätze zu verfolgen. Bei der Konstruktion von Leichtbaustrukturen für die laseradditive Fertigung finden daher verstärkt Methoden der Strukturoptimierung, insbesondere Topologieoptimierung Anwendung. Deren Ziel ist es, auf Basis numerischer Methoden unter gegebenen Lasten und Randbedingungen das Material mit Strukturrelevanz in einem definierten Bauraum zu identifizieren.

Die hohe Gestaltungfreiheit der laseradditiven Fertigung ermöglicht dem Konstrukteur eine bessere Umsetzung derartiger Leichtbauoptimierungsergebnisse als es mit konventionellen Verfahren aufgrund deren Fertigungsrestriktionen möglich ist. Es ist nun möglich, die Bionik in den Konstruktionsprozess zu implementieren. Insbesondere die Strukturbionik steht vor dem Hintergrund der Leichtbauanwendungen im Fokus des Interesses.

Die generative Fertigung kann mit geringem Logistikaufwand hoch flexibel auf schwankende Stückzahlenbedarfe der Fahrzeugvarianten angepasst werden. Die Strukturknoten können z. B. Vorort für die jeweilige Variante "Just in Sequence" hergestellt werden. Die Karosseriestrukturen können ebenfalls erst kurz vor Fertigung entsprechend hergestellt oder beschnitten werden. Ebenso ist hervorzuheben, dass während eines Fahrzeuglebenszyklus schnell und einfach auf neue funktionale Anforderungen, z. B. durch updatefähige Strukturbauteile, insbesondere den Strukturknoten reagiert werden kann.

In Weiterbildungen der Erfindung kann die Verbindungsstruktur mindestens einen topologisch optimierten Abschnitt aufweisen oder topologisch optimiert sein. Optimierungsziel ist insbesondere, dass der Karosserieknoten eine hohe Festigkeit bei geringem Gewicht aufweist (Leichtbau). Die topologisch optimierte Struktur oder der topologisch optimierte Abschnitt kann z. B. Streben oder Balken enthalten, die dem Aufbau des inneren eines Vogelknochens oder einer Viktoriaseerose ähneln können. Die Balken oder Streben können in einem Hohlraum, der von einer einhüllenden Wand der Verbindungsstruktur umgeben ist, angeordnet sein. Die einhüllende Wand kann mit Vertiefungen und/oder Ausnehmungen oder Löchern versehen sein. Die Balken oder Streben in dem von der Wand umgebenen Hohlraum versteifen die Wand und münden in diese. Die Streben oder Balken können sich auch verzweigen. Durch die generative Fertigung lassen sich die Balken oder Streben hinsichtlich der zu erwartenden Lastfälle, die auf den Strukturknoten einwirken, insbesondere in ihrer mechanischen Stabilität, optimieren. Der Karosserieknoten kann daher so optimiert sein, dass er nur dort Material aufweist, wo es benötigt wird, um bei den zu erwartenden Belastungen nicht zu versagen. Solche Optimierungen werden z. B. mittels numerischer Methoden an einem CAD-Modell des zu fertigenden Bauteils vorgenommen. Die den Hohlraum umgebende Wand verbindet vorzugsweise die Verbindungsflansche des Karosserieknotens. Die Balken oder Streben in dem Hohlraum können zwar die Verbindungsflansche ebenfalls verbinden, bevorzugt ist jedoch, dass die Balken oder Streben die Wand aussteifen. Die generative Fertigung erlaubt eine solche topologisch optimierte Ausgestaltung der Verbindungsstruktur.

Grundsätzlich erscheint es auch möglich, die Karosseriestrukturen oder zumindest eine der Karosseriestrukturen, die länglich gebildet sind und in dem Space-Frame einen Stab oder Balken bilden, ebenfalls generativ zu fertigen, wobei der, insbesondere kastenförmige, Querschnitt durch eine optional mit Vertiefungen und/oder Löchern versehene Umfangswand einen Hohlraum umgeben kann, in dem Balken oder Streben angeordnet sind, die in die Wand münden und somit die Wand aussteifen, wobei bevorzugt ist, dass diese Balken oder Streben topologisch hinsichtlich eines Leichtbaus optimiert sind.

In Weiterbildungen des Karosserieknotens können wenigstens einer, mehrere oder jeder der Verbindungsflansche jeweils eine Einfassung bilden, welche die für den Verbindungsflansch vorgesehene Karosseriestruktur außenumfangsseitig einfasst. Insbesondere wird ein Endbereich insbesondere einer länglichen Karosseriestruktur außenumfangsseitig eingefasst. Insbesondere kann das Ende der Karosseriestruktur in die Einfassung eingesteckt werden. Die Einfassung kann den Verbindungsflansch z. B. vollständig oder teilweise über den Außenumfang umgeben.

Alternativ können wenigstens einer, mehrere oder jeder der Verbindungsflansche einen Sockel bilden, auf welchen die für den Verbindungsflansch vorgesehene Karosseriestruktur, insbesondere ein Endbereich oder ein Ende der Karosseriestruktur aufsteckbar oder aufgesteckt ist. Der Außenumfang des Endbereichs der Karosseriestruktur kann somit den Sockel teilweise oder vollständig über seinen Umfang umgeben. Der Karosserieknoten kann z. B. einen oder mehrere Verbindungsflansche aufweisen, die einen Sockel bilden und einen oder mehrere Verbindungsflansche aufweisen, welche eine Einfassung bilden.

Die Einfassung oder der Sockel können z. B. zumindest so geformt werden oder sein, dass eine, bevorzugt längliche, Karosseriestruktur formschlüssig gegen Bewegungen quer zur Längsrichtung oder Längsachse der Karosseriestruktur und optional auch formschlüssig gegen eine Rotation in Längsrichtung bzw. um die Längsachse der Karosseriestruktur gesichert werden kann oder gesichert ist, wenn die Karosseriestruktur in der Einfassung oder auf dem Sockel angeordnet ist. Das Ende der Karosseriestruktur kann somit einen unrunden Querschnitt aufweisen, der eine Verdrehung der Karosseriestruktur in Längsrichtung oder um die Längsachse der Karosseriestruktur verhindert. Die Einfassung kann z. B. eine oder mehrere Laschen aufweisen, welche das Ende der Karosseriestruktur formschlüssig gegen Bewegungen quer zur Längsachse bzw. -richtung der Karosseriestruktur und/oder formschlüssig gegen eine Rotation um die Längsachse bzw. -richtung sichern.

In Weiterbildungen kann eine von der Einfassung gebildete, von der Verbindungsstruktur wegweisende Endkante der Ein- bzw. Umfassung zumindest abschnittsweise schräg zu der Umfangsrichtung der Ein- bzw. Umfassung verlaufen. Dadurch kann erreicht werden, dass die gesamte Länge der Endkante der Ein- bzw. Umfassung größer ist als der Umfang der Ein- bzw. Umfassung. Dadurch wird vorteilhaft erreicht, dass eine Schweißnaht, mittels der der Verbindungsflansch oder die Ein- bzw. Umfassung mit dem Endbereich oder den Außenumfang des Endbereichs der Karosseriestruktur vorzugsweise im Überlappstoß stoffschlüssig gefügt ist, länger als der Umfang ausgestaltet werden kann. Damit wird eine höhere Stabilität der Verbindung zwischen Verbindungsflansch und Karosseriestruktur erreicht. Bevorzugt kann die Schweißnaht eine Kehlnaht sein.

Allgemein ist bevorzugt, dass der in die Einfassung oder auf den Sockel gesteckte Endbereich einer länglichen Karosseriestruktur mittels einer Schweißnaht, insbesondere einer Kehlnaht mit dem Flansch, insbesondere der Einfassung oder dem Sockel stoffschlüssig gefügt ist.

Erfindungsgemäss weist die Verbindungsstruktur ein erstes Material und wenigstens einer der Verbindungsflansche ein von dem ersten Material verschiedenes bzw. verschiedenartiges zweites Material auf wobei das an dem Verbindungsflansch zu befestigende Ende oder der zu befestigende Endbereich der Karosseriestruktur aus einem Material ist, welches zu dem zweiten Material gleichartig ist und insbesondere zu dem ersten Material verschiedenartig ist. Gleichartig heißt, dass die Materialien mittels Schweißen gefügt werden können; verschiedenartig heißt, dass die Materialien mittels Schweißen nicht oder nicht wirtschaftlich gefügt werden können.

Hierdurch kann eine Multi-Material-Bauweise erreicht werden, die sich insbesondere durch die generative Fertigung verwirklichen lässt. Dabei kann für die Verbindungsstruktur ein hoch- oder höchstfestes erstes Material, wie z. B. ein Stahlwerkstoff, ausgewählt werden, wobei für die Verbindungsflansche ein Material ausgewählt werden kann, welches sich stoffschlüssig, insbesondere durch Schweißen mit dem Material des zu befestigenden oder des befestigten Endes der Verbindungstruktur stoffschlüssig fügen, insbesondere schweißen lässt. Beispielsweise können das zweite Material und/oder das Material, z. B. des Endbereichs der Karosseriestruktur ein Aluminiumwerkstoff sein. Alternativ kann das erste Material ein Aluminiumwerkstoff und das zweite Material und/oder das Material des zu befestigenden Endes der Karosseriestruktur ein Stahlwerkstoff sein. Auch andere Werkstoffkombinationen, erscheinen möglich, wie z. B:

| 1. Material | 2. Material |
|---|---|
| Aluminiumwerkstoff | Titanwerkstoff |
| Titanwerkstoff | Aluminiumwerkstoff |
| Stahlwerkstoff | Titanwerkstoff |
| Titanwerkstoff | Stahlwerkstoff |

Unter einem Aluminium- oder Titanwerkstoff werden nicht nur die reinen Metalle sondern auch deren Legierungen, wie z. B. Aluminiumlegierungen oder Titanlegierungen, verstanden.

Der Karosserieknoten, insbesondere die Verbindungsstruktur kann eine Andockstelle, wie z. B. eine standardisierte Andockstelle oder Zweilochandockstelle für die Aufnahme durch einen Industrieroboter aufweisen. Der Industrieroboter kann den Karosserieknoten z. B. zum Fügen mit den Karosseriestrukturen an der Andockstelle aufnehmen und entsprechend handhaben.

Der Karosserieknoten kann mit den Karosseriestrukturen selbstverständlich per Hand oder aber vorzugsweise mittels Industrierobotern gefügt werden. Beispielsweise kann ein Roboter den Karosserieknoten aufnehmen, wobei ein weiterer Roboter oder Roboterarm die beispielsweise schalenförmige Karosseriestruktur aufnimmt und das Ende der Karosseriestruktur in die Einfassung oder auf den Sockel steckt. Hierzu kann der Roboter einen Kombikopf aufweisen. Durch leichte Veränderung der Position der zu steckenden Bauteile relativ zueinander kann das Ende der Karosseriestruktur auch in eine enge Passung, die durch die Einfassung oder den Sockel bereitgestellt wird, appliziert werden. Mittels des Roboters oder eines weiteren Roboters kann der Verbindungsflansch mit der Karosseriestruktur gefügt werden.

Der mit den Karosseriestrukturen, insbesondere den ersten, zweiten und dritten Karosseriestrukturen gefügte Karosserieknoten bildet eine Karosseriesektion für z. B. selbsttragende oder gitterrahmenförmige Karosserien (Space-Frame) eines Fahrzeugs, insbesondere eines Personenkraftfahrzeugs.

Wenigstens eine längliche Karosseriestruktur kann quer zu einer oder mehreren anderen Karosseriestrukturen angeordnet sein. Beispielsweise kann sich eine erste Karosseriestruktur quer zu der Fahrzeuglängsachse oder entlang der Fahrzeugquerachse, eine zweite Karosseriestruktur entlang der Fahrzeuglängsachse und eine dritte Karosseriestruktur entlang der Fahrzeughochachse oder entlang der Fahrzeuglängsachse erstrecken. Eine vierte Karosseriestruktur kann mit einem vierten Verbindungsflansch des Karosserieknotens vorgesehen sein und sich z. B. entlang der Fahrzeughochachse oder entlang der Fahrzeuglängsachse erstrecken. Unter einem entlang der Fahrzeuglängsachse erstrecken wird nicht notwendiger Weise eine parallele Erstreckung zur Fahrzeuglängsachse verstanden, sondern auch eine Erstreckung der Längsrichtung oder Längsachse der Karosseriestruktur zumindest anteilig entlang der genannten Achse.

Beispielsweise kann der Karosserieknoten im Bereich der A-, B-, C- oder D-Säule der Fahrzeugkarosserie angeordnet sein. Alternativ oder zusätzlich kann der Karosserieknoten bodenseitig, dachseitig oder zwischen Boden und Dach angeordnet sein. Selbstverständlich kann der Karosserieknoten auch an anderen als den genannten Stellen in der Karosserie eingesetzt sein, insbesondere an den Stellen, an denen mehrere Karosseriestrukturen zusammenlaufen und z. B. hochfest gefügt werden.

In Weiterbildungen können wenigstens eine, mehrere oder jede der genannten Karosseriestrukturen aus der Gruppe der Folgenden ausgewählt sein: Querträger, Längsträger, insbesondere vorderer Längsträger und hinterer Längsträger, Schweller, dachseitige Querschiene, Motorhaubenabstützung, Scheibenwurzel, A-Säule, insbesondere obere A-Säule und untere A-Säule, B-Säule, C-Säule, D-Säule.

Die Karosseriesektion oder Karosserie kann in Weiterbildungen einen ersten Karosserieknoten, der wie hierin beschrieben ausgestaltet sein kann, und einen zweiten Karosserieknoten, der wie hierin beschrieben ausgestaltet sein kann, aufweisen. Der erste Karosserieknoten kann mit dem zweiten Karosserieknoten über eine der genannten Karosseriestrukturen verbunden sein, insbesondere dergestalt, dass der erste Karosserieknoten an einem ersten Ende der Karosseriestruktur und der zweite Karosserieknoten an einem zweiten Ende der Karosseriestruktur befestigt ist. Beispielsweise können der erste Karosserieknoten und der zweite Karosserieknoten auf unterschiedlichen Fahrzeug- oder Karosserieseiten angeordnet sein oder auf der gleichen Fahrzeug- oder Karosserieseite, jedoch auf unterschiedlichen Längspositionen oder Höhenpositionen angeordnet sein.

Wie bereits erwähnt, können die Bauteile mittels einer Kehlnaht im oder am Überlappstoß geschweißt werden. Die Umfassung oder der Sockel der Profile wird auch als Einschuhung bezeichnet. Z. B. kann das Ende der Karosseriestruktur mit ca. 5 bis 20 mm, insbesondere z. B. 10 mm Tiefe in die Einfassung oder auf den Sockel gesteckt sein. Diese Verbindung ermöglicht das umlaufende Schweißen für eine große Anbindungslänge bei einer gleichzeitig guten Vorpositionierung der Bauteile. Ebenso ist ein Toleranzausgleich durch diese Art der Verbindung möglich. Die Karosseriestrukturen werden automatisch, d. h. durch die vorgegebene Geometrie des Sockels, durch den Karosserieknoten ausgerichtet und fixiert, d. h. insbesondere gegen translatorische Bewegungen quer zur Längsachse bzw. Längsrichtung und rotatorische Bewegungen um die Längsachse bzw. -richtung.

Da die Karosseriestrukturen Abweichungen von der Sollkontur aufweisen können, kann eine Anpassung des Verbindungsflansches vorgesehen sein, für den die entsprechende Karosseriestruktur vorgesehen ist. Insbesondere soll das zulässige Spaltmaß von z. B. maximal 0,2 mm für das Laserschweißen eingehalten werden. Hieraus ergibt sich ein vorteilhaftes Verfahren zum Herstellen eines hierin beschriebenen Karosserieknotens, wobei eine erste, zweite und dritte Karosseriestruktur bereitgestellt werden. Von wenigstens einer, mehreren oder jeden der Karosseriestrukturen wird die IST-Geometrie einschließlich der IST-Maße ermittelt. Insbesondere kann eine Abweichung von der SOLL-Geometrie einschließlich der SOLL-Maße der jeweiligen Karosseriestruktur ermittelt werden. Dies kann z. B. mittels Laservermessen oder Scannen erfolgen. Die IST-Geometrie einschließlich der IST-Maße, werden als Daten von dem CAD-Programm (Computerprogramm) übernommen und in Form von Steuer- oder/und Geometriedaten an die Fertigungsmaschine übermittelt. Die Maschine stellt dann den für die individuelle Karosseriestruktur vorgesehenen Verbindungsflansch passend zu der ermittelten IST-Geometrie einschließlich der IST-Maße mittels eines generativen Herstellungsverfahrens her. Die für die Karosseriestrukturen vorgesehenen Verbindungsflansche können z. B. zusammen mit dem Karosserieknoten geformt werden, insbesondere als monolithischer Körper.

Wenn die selbsttragende Karosserie, insbesondere der Space-Frame komplett gefügt ist, kann er z. B. vermessen werden. Die Kontaktflächen für Ein- und Anbauteile, wie z. B. Cockpit oder Verkleidungselemente, können im Folgeschritt zum jeweiligen Bauteil auf die Profile oder Knoten geklebt oder geschweißt oder gedruckt werden, wie z. B. mit einem 3D-Druckverfahren bzw. einem generativen Herstellungsverfahren wie es hierin genannt ist.

Die Erfindung wurde anhand mehrerer Ausführungen und Weiterbildungen beschrieben. Im Folgenden wird eine bevorzugte Ausführung der Erfindung anhand von Figuren beschrieben. Die dabei offenbarten Merkmale bilden den Gegenstand der Erfindung einzeln und in jeglicher Merkmalskombination vorteilhaft weiter. Es zeigen:
- Figur 1: eine perspektivische Ansicht einer Karosseriesektion einer Space-Frame-Karosserie,

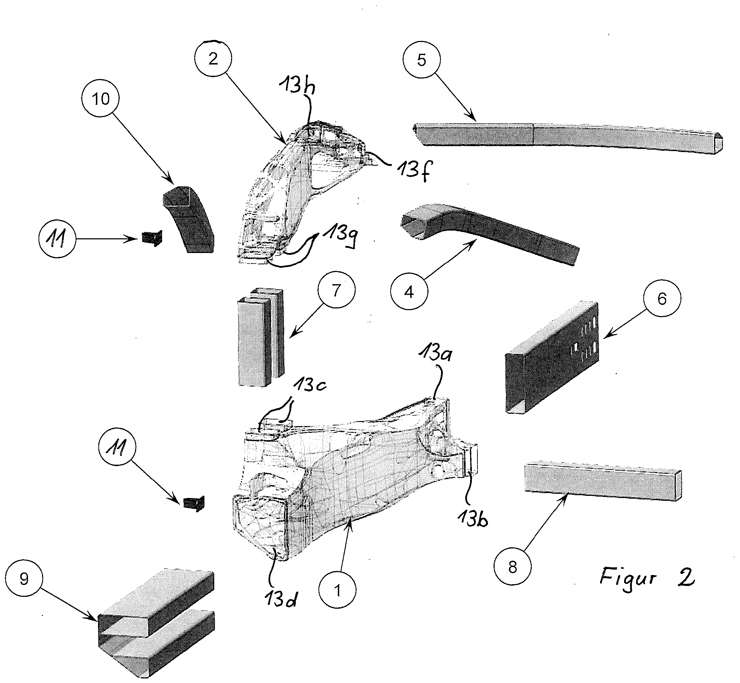

- Figur 2: die Einzelteile der Sektion aus Figur 1,
- Figur 3: einen Schnitt durch einen Karosserieknoten der Karosseriesektion aus Figur 1 und
- Figur 4: einen anderen Schnitt durch den Karosserieknoten aus Figur 1.

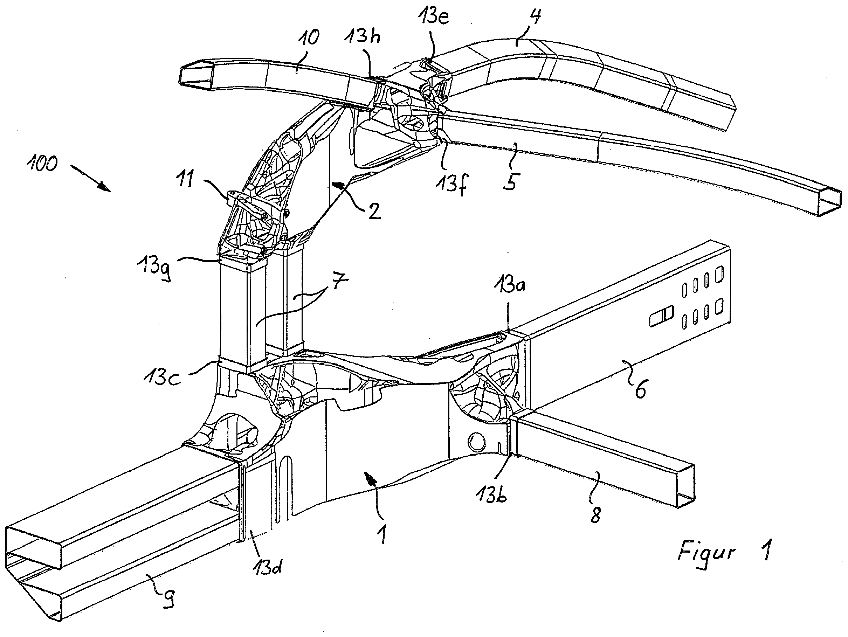

Figur 1 zeigt eine Karosseriesektion 100 beispielhaft im Bereich der linken A-Säule einer Karosserie für ein Kraftfahrzeug. Die Karosseriesektion 100 weist einen ersten Karosserieknoten 1 und einen zweiten Karosserieknoten 2 zum Verbinden von z.B. schalenförmigen Karosseriestrukturen 4, 5, 6, 7, 8, 9, 10 auf. Der erste Karosserieknoten 1 und der zweite Karosserieknoten 2 sind zwar geometrisch unterschiedlich aber von ihrer Funktion und den entsprechenden Funktionselementen her ähnlich aufgebaut. Eine Bezugnahme auf Details des ersten Karosserieknotens 1 gilt somit sinngemäß auch als Bezugnahme auf den zweiten Karosserieknoten 2 und umgekehrt.

Der erste Karosserieknoten 1 weist einen ersten Verbindungsflansch 13a für eine Befestigung einer schalenförmigen ersten Verbindungsstruktur 6, nämlich eines vorderen Längsträgers, einen zweiten Verbindungsflansch 13b für die Befestigung einer schalenförmigen zweiten Karosseriestruktur 8, nämlich eines Querträgers, der quer zur Fahrzeug- oder Karosserielängsachse verläuft und insbesondere einen entsprechend oder im Wesentlichen spiegelverkehrt ausgebildeten Karosserieknoten auf der rechten Fahrzeugseite mit dem Karosserieknoten 1 der linken Fahrzeugseite verbindet, und einen dritten Verbindungsflansch 13c für die Befestigung einer schalenförmigen dritten Karosseriestruktur 7, insbesondere einer unteren A-Säule, auf. Die dritte Karosseriestruktur 7 verbindet den zweiten Karosserieknoten 2 mit dem ersten Karosserieknoten 1 und verläuft in etwa Richtung der Karosseriehochachse oder vertikal.

Der Karosserieknoten 1 weist ferner einen vierten Verbindungsflansch 13d für die Befestigung einer schalenförmigen vierten Karosseriestruktur 9 auf, die sich in etwa parallel zu der Karosserielängsachse erstreckt und insbesondere ein Schweller sein kann.

Der zweite Karosserieknoten 2 weist einen ersten Verbindungsflansch 13e zur Befestigung einer schalenförmigen ersten Karosseriestruktur 4, insbesondere einer Motorhaubenauflage auf, die sich entlang der Karosserielängsachse nach vorne, entlang der Karosseriehochachse nach unten und entlang der Karosseriequerachse nach innen erstreckt. Der Karosserieknoten 2 umfasst einen zweiten Verbindungsflansch 13f für die Befestigung einer schalenförmigen zweiten Karosseriestruktur 5, insbesondere einer sich entlang der Karosseriequerachse erstreckenden Scheibenwurzel. Der Karosserieknoten 2 weist einen dritten Verbindungsflansch 13g für die Befestigung einer schalenförmigen dritten Karosseriestruktur 7, insbesondere eines sich entlang der Karosseriehochachse erstreckenden unteren Teils der A-Säule auf. Der Karosserieknoten 2 weist einen vierten Verbindungsflansch 13h für die Befestigung einer schalenförmigen vierten Karosseriestruktur 10, insbesondere einer sich entlang der Karosserielängsachse nach hinten und entlang der Karosseriehochachse nach oben erstreckenden oberen Teil der A-Säule auf.

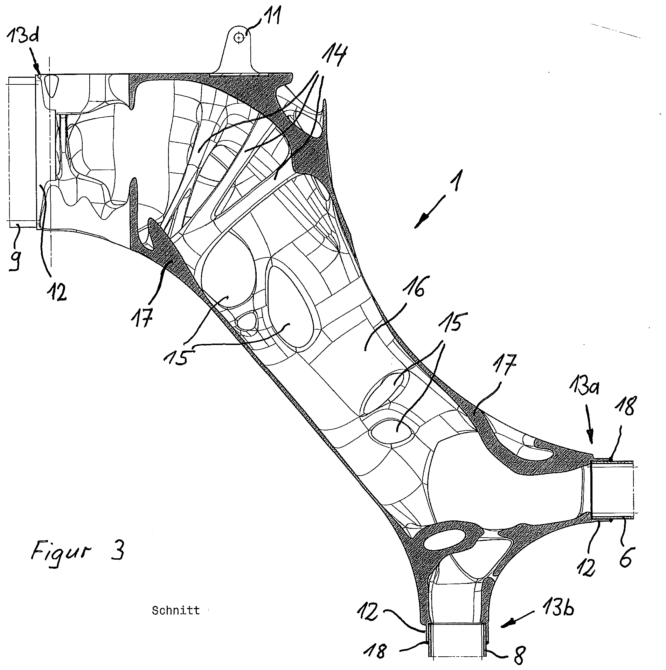

Die gezeigten Karosseriestrukturen 4, 5, 6, 7, 8, 9, 10 sind an ihren hierfür vorgesehenen Verbindungsflanschen 13a bis 13h mittels Schweißnähten 18 (vgl. Figur 3) stoffschlüssig befestigt. Die Schweißnähte 18 können z. B. mittels Laserschweißens hergestellt sein oder werden.

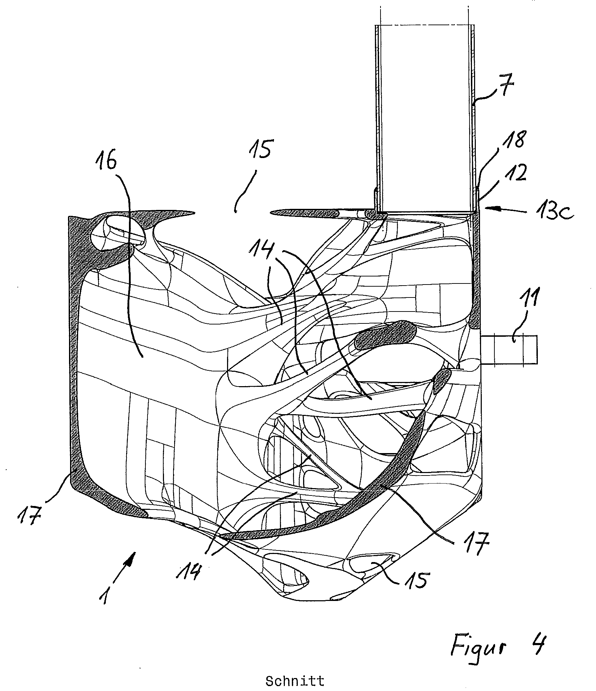

Wie am besten aus den Figuren 3 und 4 hervorgeht, können die Verbindungsflansche 13a bis 13d über eine Verbindungsstruktur 17, die eine einen Hohlraum 16 einhüllende Wand umfasst, verbunden sein. Die einhüllende Wand kann mehrere Ausnehmungen oder Durchbrüche 15 aufweisen. In dem Hohlraum 16 sind mehrere in die den Hohlraum 16 einhüllende Wand mündende Streben 14 angeordnet, die von der Verbindungsstruktur 17 umfasst sind.

Die Verbindungsstruktur 17 einschließlich ihrer den Hohlraum 16 einfassenden Wand und der Streben 14 ist topologisch optimiert, insbesondere hinsichtlich eines Leichtbaus, d. h. für eine möglichst hohe Festigkeit bei möglichst geringem Gewicht. Die topologisch optimierte Struktur lässt sich durch numerische Verfahren ermitteln und mittels eines generativen Herstellungsverfahrens herstellen.

Insbesondere die Ausführungen zu der Verbindungsstruktur 17 des ersten Karosserieknotens 1 gelten sinngemäß auch für den zweiten Karosserieknoten 2, auch wenn die Geometrie sich von der des ersten Karosserieknotens 1 unterscheidet.

Wie am besten aus den Figuren 3 und 4 erkennbar ist, weisen die Verbindungsflansche 13a bis 13d eine Ein- bzw. Umfassung 12 auf, die auch als Einschuhung bezeichnet werden kann, die eine vollständig über den Umfang umlaufende Wand bildet. Die jeweilige Einfassung 12 der Flansche 13a bis 13d fassen korrespondierende Karosseriestrukturen 6, 7, 8, 9 über deren Außenumfang ein, insbesondere eng ein, wie z. B. mit einem maximalen Spaltmaß von kleiner oder gleich 0,3 mm oder kleiner oder gleich 0,2 mm. Das Ende der korrespondierenden Karosseriestruktur 6, 7, 8, 9 ist in den Flansch 13a bis 13d eingesteckt, wobei die Einfassung 12 im Überlappstoß mit dem Außenumfang des Endbereichs der Karosseriestruktur 6, 7, 8, 9 verschweißt ist, insbesondere mittels einer teilweise oder vollständig umlaufenden Schweißnaht 18, insbesondere einer Kehlnaht. Durch die seitliche Führung, die durch die Einfassung 12 bereitgestellt wird, lässt sich die Karosseriestruktur 6, 7, 8, 9 quer zu ihrer Längsachse im Wesentlichen nicht oder nicht nennenswert bewegen, d. h. abgesehen von Spiel aufgrund des Spaltmaßes, welches zum Einstecken der Karosseriestruktur 6, 7, 8, 9 in den Flansch 13a bis 13d erforderlich ist. Durch den unrunden, insbesondere nicht rotationssymmetrischen Querschnitt der Karosseriestrukturen 6, 7, 8, 9 werden diese formschlüssig gegen Verdrehung in Bezug auf den Flansch 13a bis 13d verdrehgesichert. Die Beschreibung zu den Flanschen 13a bis 13d des ersten Karosserieknotens 1 gilt sinngemäß auch für die Flansche 13e bis 13g des zweiten Karosserieknotens 2.

Mindestens einer, vorzugsweise jeder der Flansche 13a bis 13g weist eine nach innen ragende Schulter auf, welche einen axialen Anschlag für die dem Flansch 13a bis 13g zugeordnete Karosseriestruktur 4 bis 10 bildet und insbesondere eine maximale Einstecktiefe der Karosseriestruktur 4 bis 10 in den Flansch 13a bis 13g festlegt oder definiert.

Wie am besten aus Figur 1 ersichtlich ist, weist der erste Karosserieknoten 1 zwei Flansche 13c und der zweite Karosserieknoten 2 zwei Flansche 13g auf. Die Karosserieknoten 1 und 2 sind über zwei schalen- bzw. kastenförmige, insbesondere als Strangpressprofil gebildete Karosseriestrukturen 7 verbunden. Eine der Karosseriestrukturen 7 verbindet einen der Verbindungsflansche 13c mit einem der Verbindungsflansche 13g, wobei die andere Karosseriestruktur 7 den anderen Verbindungsflansch 13c mit dem anderen Verbindungsflansch 13g verbindet.

Wie z. B. aus den Figuren 1, 3 und 4 hervorgeht, können der erste Karosserieknoten 1 und/oder der zweite Karosserieknoten 2 ein von der Außenseite der Karosserie oder der Karosseriesektion 100 ragende Lasche 11 aufweisen, welche den Teil eines Gelenks oder Scharniers für eine im späteren Verlauf der Fahrzeugmontage anzubringenden Tür, in dem gezeigten Beispiel der Fahrertür bei linksgesteuerten Fahrzeugen oder der Beifahrertür bei rechtsgesteuerten Fahrzeugen, erlaubt. Die Lasche 11 weist eine Bohrung auf, die insbesondere mit der Bohrung der Lasche 11 des anderen Karosserieknotens 1 fluchtet. Die Lasche 11 kann z. B. bei der Herstellung des Karosserieknotens 1, 2 mit diesem generativ geformt werden oder nachträglich an die Verbindungsstruktur 17 des Karosserieknotens 1, 2 angebracht werden, wie z. B. durch Anschweißen, Ankleben oder durch Schrauben oder ein anderes kraft- oder formschlüssiges Verbindungselement.

## Patentansprüche

1. Karosserieknoten (1, 2) zum Verbinden von, insbesondere schalenförmigen, Karosseriestrukturen (6, 7, 8, 9, 4, 5, 7, 10) eines Fahrzeugs, der Karosserieknoten (1, 2) umfassend:
- einen ersten Verbindungsflansch (13a, 13e) für eine Verbindung mit einer ersten Karosseriestruktur (6, 4),
- einen zweiten Verbindungsflansch (13b, 13f) für eine Verbindung mit einer zweiten Karosseriestruktur (8, 5),
- einen dritten Verbindungsflansch (13c, 13g) für eine Verbindung mit einer dritten Karosseriestruktur (7) und
- eine Verbindungsstruktur (17), welche die Verbindungsflansche (13a, 13b, 13c, 13d, 13e, 13f, 13g) starr miteinander verbindet und mit den Verbindungsflanschen (13a, 13b, 13c, 13d, 13e, 13f, 13g) bevorzugt einen monolithischen Körper bildet,
**dadurch gekennzeichnet, dass**
der Karosserieknoten (1, 2) generativ mittels eines der folgenden Verfahren gefertigt ist:
- selektives Laserschmelzen (SLM),
- selektives Lasersintern (SLS),
- direktes Laserschmelzen (DMLS),
- Lasergenerieren,
- laseradditives Herstellungsverfahren (LAM) oder
- Laserpulverauftragsschweißen,
und die Verbindungsstruktur (17) ein erstes Material und wenigstens einer der Verbindungsflansche (13a, 13b, 13c, 13d, 13e, 13f, 13g) ein von dem ersten Material verschiedenartiges zweites Material aufweist, wobei das an dem Verbindungsflansch (13a, 13b, 13c, 13d, 13e, 13f, 13g) zu befestigende Ende der Karosseriestruktur (4, 5, 6, 7, 8, 9, 10) aus einem Material ist, welches zu dem zweiten Material gleichartig ist und insbesondere zu dem ersten Material verschiedenartig ist.

2. Karosserieknoten (1, 2) nach Anspruch 1, **dadurch gekennzeichnet, dass** wenigstens einer der Verbindungsflansche (13a, 13b, 13c, 13d, 13e, 13f, 13g) eine Einfassung (12) bildet, welche die für den Verbindungsflansch (13a, 13b, 13c, 13d, 13e, 13f, 13g) vorgesehene Karosseriestruktur (4, 5, 6, 7, 8, 9, 10), insbesondere einen Endbereich der Karosseriestruktur (4, 5, 6, 7, 8, 9, 10), außenumfangsseitig einfasst.

3. Karosserieknoten (1, 2) nach Anspruch 1, **dadurch gekennzeichnet, dass** wenigstens einer der Verbindungsflansche (13a, 13b, 13c, 13d, 13e, 13f, 13g) einen Sockel bildet, auf welchen die für den Verbindungsflansch (13a, 13b, 13c, 13d, 13e, 13f, 13g) vorgesehene Karosseriestruktur (4, 5, 6, 7, 8, 9, 10), insbesondere ein Endbereich der Karosseriestruktur (4, 5, 6, 7, 8, 9, 10), aufgesteckt ist

4. Karosserieknoten (1, 2) nach Anspruch 2 oder 3, **dadurch gekennzeichnet, dass** die Einfassung (12) oder der Sockel so geformt ist, dass die, bevorzugt längliche, Karosseriestruktur (4, 5, 6, 7, 8, 9, 10) formschlüssig gegen Bewegungen quer zur Längsrichtung der Karosseriestruktur (4, 5, 6, 7, 8, 9, 10) und optional auch formschlüssig gegen eine Rotation um die Längsachse der Karosseriestruktur (4, 5, 6, 7, 8, 9, 10) gesichert werden kann.

5. Karosserieknoten (1, 2) nach Anspruch 2 oder 4, **dadurch gekennzeichnet, dass** eine von der Einfassung (12) gebildete von der Verbindungsstruktur (17) weg weisende Endkante der Einfassung (12) zumindest abschnittsweise schräg zu der Umfangsrichtung der Einfassung (12) verläuft.

6. Karosserieknoten (1, 2) nach einem der vorhergehenden Ansprüche, **dadurch gekennzeichnet, dass** die Verbindungsstruktur (17) mindestens einen topologisch optimierten Abschnitt aufweist oder topologisch optimiert ist, damit z. B. der Karosserieknoten (1, 2) eine hohe Festigkeit bei geringem Gewicht aufweist.

7. Karosseriesektion (100) für eine z.B. selbsttragende oder gitterrahmenförmige Karosserie eines Fahrzeugs, insbesondere eines Kraftfahrzeugs, oder einen Spaceframe, wobei die Karosseriesektion (100) wenigstens einen Karosserieknoten (1, 2) nach einem der vorhergehenden Ansprüche und mehrere, insbesondere schalenförmige, Karosseriestrukturen (6, 7, 8, 9, 4, 5, 10) aufweist, wobei
- die erste Karosseriestruktur (6, 4) an dem ersten Verbindungsflansch (13a, 13f) befestigt ist,
- die zweite Karosseriestruktur (8, 5) an dem zweiten Verbindungsflansch (13b, 13f) befestigt ist und
- die dritte Karosseriestruktur (7) an dem dritten Verbindungsflansch (13c, 13g) befestigt ist.

8. Karosseriesektion (100) nach dem vorhergehenden Anspruch, **dadurch gekennzeichnet, dass** wenigstens eine der Karosseriestrukturen (4, 5, 6, 7, 8, 9, 10) kastenförmig, insbesondere mit einem geschlossenen Querschnitt, und/oder länglich ausgestaltet ist.

9. Karosseriesektion (100) nach einem der zwei vorhergehenden Ansprüche, **dadurch gekennzeichnet, dass** wenigstens eine der Karosseriestrukturen (4, 5, 6, 7, 8, 9, 10) ein Strangpressprofil oder ein aus einem oder mehreren Blechen zusammengesetztes Profil ist.

10. Karosseriesektion (100) nach einem der drei vorhergehenden Ansprüche, **dadurch gekennzeichnet, dass** wenigstens eine längliche Karosseriestruktur (4, 5, 6, 7, 8, 9, 10) quer zu einer oder mehreren anderen Karosseriestrukturen (4, 5, 6, 7, 8, 9, 10) angeordnet ist.

11. Karosseriesektion (100) nach einem der vier vorhergehenden Ansprüche **dadurch gekennzeichnet, dass** wenigstens eine oder alle der genannten Karosseriestrukturen (4, 5, 6, 7, 8, 9, 10) aus der Gruppe der folgenden ausgewählt sind:
- Motorhaubenabstützung (4),
- Scheibenwurzel (5),
- Längsträger (6),
- A-Säule (7),
- B-Säule,
- C-Säule,
- Querträger (8) oder
- Schweller (9).

12. Karosseriesektion (100) nach einem der fünf vorhergehenden Ansprüche, **dadurch gekennzeichnet, dass** wenigstens eine der Karosseriestrukturen (4, 5, 6, 7, 8, 9, 10) mit dem Karosserieknoten (1, 2) stoffschlüssig gefügt, insbesondere verschweißt ist, wobei bevorzugt ist, dass die Schweißnaht länger als der Umfang der Karosseriestruktur (4, 5, 6, 7, 8, 9, 10) ist.

13. Karosseriesektion (100) nach einem der sechs vorhergehenden Ansprüche, **gekennzeichnet durch** einen ersten Karosserieknoten (1), der nach einem der Ansprüche 1 bis 6 ausgestaltet ist, und einen zweiten Karosserieknoten (2), der nach einem der Ansprüche 1 bis 6 ausgestaltet ist, wobei der erste Karosserieknoten (1) mit dem zweiten Karosserieknoten (2) über eine der Karosseriestrukturen (7) verbunden ist, insbesondere dergestalt, dass der erste Karosserieknoten (1) an einem ersten Ende der Karosseriestruktur (7) und der zweite Karosserieknoten (2) an einem zweiten Ende der Karosseriestruktur (7) befestigt ist.

14. Verfahren zum Herstellen eines Karosserieknotens (1, 2) nach einem der Ansprüche 1 bis 6, folgende Schritte umfassend:
- Bereitstellen einer ersten Karosseriestruktur (6, 4), einer zweiten Karosseriestruktur (8, 5) und einer dritten Karosseriestruktur (7), wobei von wenigstens einer der Karosseriestrukturen (4, 5, 6, 7, 8, 9, 10) die IST-Geometrie einschließlich IST-Maßen ermittelt wird und der für die Karosseriestruktur (4, 5, 6, 7, 8, 9, 10) vorgesehene Verbindungsflansch (13a bis 13h) passend zu der ermittelten IST-Geometrie einschließlich IST-Maßen generativ geformt wird, insbesondere zusammen mit dem Karosserieknoten (1, 2) geformt wird.

## Claims

1. Vehicle body node (1, 2) for connecting, in particular shell-shaped, vehicle body structures (6, 7, 8, 9, 4, 5, 7, 10) of a vehicle, the vehicle body node (1, 2) comprising:
- a first connecting flange (13a, 13e) for a connection to a first vehicle body structure (6, 4),
- a second connecting flange (13b, 13f) for a connection to a second vehicle body structure (8, 5),
- a third connecting flange (13c, 13g) for a connection to a third vehicle body structure (7) and
- a connecting structure (17) that connects the connecting flanges (13a, 13b, 13c, 13d, 13e, 13f, 13g) rigidly to one another and preferably forms a monolithic body with the connecting flanges (13a, 13b, 13c, 13d, 13e, 13f, 13g),
**characterised in that**
the vehicle body node (1, 2) is produced in a generative manner by means of one of the following methods:
- selective laser melting (SLM),
- selective laser sintering (SLS),
- direct laser melting (DMLS),
- laser generating,
- laser additive manufacturing method (LAM) or
- laser powder build-up welding,
and the connecting structure (17) comprises a first material and at least one of the connecting flanges (13a, 13b, 13c, 13d, 13e, 13f, 13g) comprises a second material that is different to the first material, wherein the end of the vehicle body structure (4, 5, 6, 7, 8, 9, 10) that is to be fastened to the connecting flange (13a, 13b, 13c, 13d, 13e, 13f, 13g) is embodied from a material that is identical to the second material and in particular is different to the first material.

2. Vehicle body node (1, 2) according to claim 1, **characterised in that** at least one of the connecting flanges (13a, 13b, 13c, 13d, 13e, 13f, 13g) forms a surround (12) that surrounds on the outer circumferential side the vehicle body structure (4, 5, 6, 7, 8, 9, 10) that is provided for the connecting flange (13a, 13b, 13c, 13d, 13e, 13f, 13g), in particular an end region of the vehicle body structure (4, 5, 6, 7, 8, 9, 10).

3. Vehicle body node (1, 2) according to claim 1, **characterised in that** at least one of the connecting flanges (13a, 13b, 13c, 13d, 13e, 13f, 13g) forms a base which the vehicle body structure (4, 5, 6, 7, 8, 9, 10) that is provided for the connecting flange (13a, 13b, 13c, 13d, 13e, 13f, 13g) is attached to, in particular an end region of the vehicle body structure (4, 5, 6, 7, 8, 9, 10) .

4. Vehicle body node (1, 2) according to claim 2 or 3, **characterised in that** the surround (12) or the base is formed in such a manner that the preferably elongated vehicle body structure (4, 5, 6, 7, 8, 9, 10) can be secured in a positive-locking manner against movements in a transverse manner with respect to the longitudinal direction of the vehicle body structure (4, 5, 6, 7, 8, 9, 10) and optionally also can be secured in a positive-locking manner against a rotation about the longitudinal axis of the vehicle body structure (4, 5, 6, 7, 8, 9, 10).

5. Vehicle body node (1, 2) according to claim 2 or 4, **characterised in that** an end edge of the surround (12), said end edge being formed by the surround (12) and away from the connecting structure (17) extends at least in sections at an incline with respect to the circumferential direction of the surround (12).

6. Vehicle body node (1, 2) according to one of the preceding claims, **characterised in that** the connecting structure (17) comprises at least one section that is topologically optimised or said connecting structure is topologically optimised so that for example the vehicle body node (1, 2) comprises a high degree of rigidity with a light weight.

7. Vehicle body section (100) for a for example self-supporting or grid frame-shaped vehicle body of a vehicle, in particular a motor vehicle, or a spaceframe, wherein the vehicle body section (100) comprises at least one vehicle body node (1, 2) according to one of the preceding claims and multiple, in particular shell-shaped, vehicle body structures (6, 7, 8, 9, 4, 5, 10), wherein
- the first vehicle body structure (6, 4) is fastened to the first connecting flange (13a, 13f),
- the second vehicle body structure (8, 5) is fastened to the second connecting flange (13b, 13f) and
- the third vehicle body structure (7) is fastened to the third connecting flange (13c, 13g).

8. Vehicle body section (100) according to the preceding claim, **characterised in that** at least one of the vehicle body structures (4, 5, 6, 7, 8, 9, 10) is box-shaped, in particular having a closed cross section, and/or is embodied in an elongated manner.

9. Vehicle body section (100) according to one of the two preceding claims, **characterised in that** at least one of the vehicle body structures (4, 5, 6, 7, 8, 9, 10) is an extruded section or a profile that is combined from one or multiple metal sheets.

10. Vehicle body section (100) according to one of the three preceding claims, **characterised in that** at least one elongated vehicle body structure (4, 5, 6, 7, 8, 9, 10) is arranged in a transverse manner with respect to one or multiple other vehicle body structures (4, 5, 6, 7, 8, 9, 10) .

11. Vehicle body section (100) according to one of the four preceding claims, **characterised in that** at least one or all of the mentioned vehicle body structures (4, 5, 6, 7, 8, 9, 10) is selected from the group of the following:
- bonnet support (4),
- windscreen base (5),
- elongated beam (6),
- A column (7),
- B column,
- C column,
- cross beam (8) or
- sill (9).

12. Vehicle body section (100) according to one of the five preceding claims, **characterised in that** at least one of the vehicle body structures (4, 5, 6, 7, 8, 9, 10) are joined to the vehicle body node (1, 2) in a materially-bonded manner, in particular is welded, wherein it is preferred that the welding seam is longer than the circumference of the vehicle body structure (4, 5, 6, 7, 8, 9, 10).

13. Vehicle body section (100) according to one of the six preceding claims, **characterised by** a first vehicle body node (1) that is embodied according to one of claims 1 to 6 and a second vehicle body node (2) that is embodied according to one of claims 1 to 6, wherein the first vehicle body node (1) is connected to the second vehicle body node (2) via one of the vehicle body structures (7), in particular in such a manner that the first vehicle body node (1) is fastened to a first end of the vehicle body structure (7) and the second vehicle body node (2) is fastened to a second end of the vehicle body structure (7).

14. Method for producing a vehicle body node (1, 2) according to one of claims 1 to 6, comprising the following steps:
- providing a first vehicle body structure (6, 4), a second vehicle body structure (8, 5) and a third vehicle body structure (7), wherein the actual geometry including actual dimensions of at least one of the vehicle body structures (4, 5, 6, 7, 8, 9, 10) is identified and the connecting flange (13a to 13h) that is provided for the vehicle body structure (4, 5, 6, 7, 8, 9, 10) is formed in a generative manner so as to match the actual geometry including the actual dimensions that are identified, in particular said connecting flange is formed together with the vehicle body node (1, 2).

## Revendications

1. Noeud de carrosserie (1, 2) destiné à relier des structures de carrosserie (6, 7, 8, 9, 4, 5, 7, 10), en particulier en forme de coque, d'un véhicule, le nœud de carrosserie (1, 2) comprenant :
- une première bride de liaison (13a, 13e) pour une liaison à une première structure de carrosserie (6, 4),
- une deuxième bride de liaison (13b, 13f) pour une liaison à une deuxième structure de carrosserie (8, 5),
- une troisième bride de liaison (13c, 13g) pour une liaison à une troisième structure de carrosserie (7) et
- une structure de liaison (17) qui relie les brides de liaison (13a, 13b, 13c, 13d, 13e, 13f, 13g) de manière rigide les unes aux autres et, avec les brides de liaison (13a, 13b, 13c, 13d, 13e, 13f, 13g), forme de préférence un corps monolithique,
**caractérisé en ce que**
le nœud de carrosserie (1, 2) est fabriqué de manière générative à l'aide d'un des procédés suivants :
- fusion sélective par laser (SLM),
- frittage sélectif au laser (SLS),
- fusion directe par laser (DMLS),
- génération au laser,
- procédé de fabrication additive au laser (LAM) ou
- soudage au laser par dépôt de poudre,
et la structure de liaison (17) présente un premier matériau et au moins une des brides de liaison (13a, 13b, 13c, 13d, 13e, 13f, 13g) présente un second matériau différent du premier matériau, dans lequel l'extrémité de la structure de carrosserie (4, 5, 6, 7, 8, 9, 10) qui doit être fixée à la bride de liaison (13a, 13b, 13c, 13d, 13e, 13f, 13g) est composée d'un matériau qui est équivalent au second matériau et en particulier est différent du premier matériau.

2. Noeud de carrosserie (1, 2) selon la revendication 1, **caractérisé en ce qu'**au moins une des brides de liaison (13a, 13b, 13c, 13d, 13e, 13f, 13g) forme une bordure (12) qui borde du côté de la périphérie extérieure la structure de carrosserie (4, 5, 6, 7, 8, 9, 10) prévue pour la bride de liaison (13a, 13b, 13c, 13d, 13e, 13f, 13g), en particulier une zone d'extrémité de la structure de carrosserie (4, 5, 6, 7, 8, 9, 10).

3. Noeud de carrosserie (1, 2) selon la revendication 1, **caractérisé en ce qu'**au moins une des brides de liaison (13a, 13b, 13c, 13d, 13e, 13f, 13g) forme un socle sur lequel est placée la structure de carrosserie (4, 5, 6, 7, 8, 9, 10) prévue pour la bride de liaison (13a, 13b, 13c, 13d, 13e, 13f, 13g), en particulier une zone d'extrémité de la structure de carrosserie (4, 5, 6, 7, 8, 9, 10).

4. Noeud de carrosserie (1, 2) selon la revendication 2 ou 3, **caractérisé en ce que** la bordure (12) ou le socle est formé(e) de telle sorte que la structure de carrosserie (4, 5, 6, 7, 8, 9, 10), de préférence oblongue, peut être bloquée par complémentarité de forme contre tout mouvement transversalement à la direction longitudinale de la structure de carrosserie (4, 5, 6, 7, 8, 9, 10) et en option également par complémentarité de forme contre toute rotation autour de l'axe longitudinal de la structure de carrosserie (4, 5, 6, 7, 8, 9, 10) .

5. Noeud de carrosserie (1, 2) selon la revendication 2 ou 4, **caractérisé en ce qu'**un bord d'extrémité de la bordure (12) formé par la bordure (12) et éloigné de la structure de liaison (17) s'étend au moins par sections de manière de manière olbique par rapport à la direction périphérique de la bordure (12) .

6. Noeud de carrosserie (1, 2) selon une des revendications précédentes, **caractérisé en ce que** la structure de liaison (17) présente au moins une section topologiquement optimisée ou est topologiquement optimisée afin que par exemple le nœud de carrosserie (1, 2) présente une résistance élevée avec un poids faible.

7. Section de carrosserie (100) pour une carrosserie, par exemple monocoque ou ayant la forme d'un châssis en treillis, d'un véhicule, en particulier d'un véhicule automobile, ou un cadre de châssis en treillis (spaceframe), dans laquelle la section de carrosserie (100) présente au moins un nœud de carrosserie (1, 2) selon une des revendications précédentes et plusieurs structures de carrosserie (6, 7, 8, 9, 4, 5, 10), en particulier en forme de coque, dans laquelle
- la première structure de carrosserie (6, 4) est fixée à la première bride de liaison (13a, 13f),
- la deuxième structure de carrosserie (8, 5) est fixée à la deuxième bride de liaison (13b, 13f) et
- la troisième structure de carrosserie (7) est fixée à la troisième bride de liaison (13c, 13g).

8. Section de carrosserie (100) selon la revendication précédente, **caractérisée en ce qu'**au moins une des structures de carrosserie (4, 5, 6, 7, 8, 9, 10) a une forme de caisse, en particulier est réalisée avec une section fermée et/ou oblongue.

9. Section de carrosserie (100) selon une des deux revendications précédentes, **caractérisée en ce qu'**au moins une des structures de carrosserie (4, 5, 6, 7, 8, 9, 10) est un profilé extrudé ou un profilé composé d'une ou de plusieurs tôles.

10. Section de carrosserie (100) selon une des trois revendications précédentes, **caractérisée en ce qu'**au moins une structure de carrosserie oblongue (4, 5, 6, 7, 8, 9, 10) est disposée transversalement à une ou à plusieurs autres structures de carrosserie (4, 5, 6, 7, 8, 9, 10).

11. Section de carrosserie (100) selon une des quatre revendications précédentes, **caractérisée en ce qu'**au moins une ou l'ensemble desdites structures de carrosserie (4, 5, 6, 7, 8, 9, 10) sont choisies dans le groupe constitué des structures suivantes :
- renfort de capot (4),
- base de vitre (5),
- support longitudinal (6),
- colonne A (7),
- colonne B,
- colonne C,
- support transversal (8) ou
- pièce d'appui (9).

12. Section de carrosserie (100) selon une des cinq revendications précédentes, **caractérisée en ce qu'**au moins une des structures de carrosserie (4, 5, 6, 7, 8, 9, 10) est assemblé avec le nœud de carrosserie (1, 2) par liaison de matière, en particulier est soudée, dans laquelle il est préféré que le cordon de soudure soit plus long que la périphérie de la structure de carrosserie (4, 5, 6, 7, 8, 9, 10).

13. Section de carrosserie (100) selon une des six revendications précédentes, **caractérisée par** un premier nœud de carrosserie (1), qui est réalisé selon une des revendications 1 à 6, et un second nœud de carrosserie (2), qui est réalisé selon une des revendications 1 à 6, le premier nœud de carrosserie (1) étant relié au second nœud de carrosserie (2) par le biais d'une des structures de carrosserie (7), en particulier de telle sorte que le premier nœud de carrosserie (1) soit fixé à une première extrémité de la structure de carrosserie (7) et le deuxième nœud de carrosserie (2) à une seconde extrémité de la structure de carrosserie (7).

14. Procédé de fabrication d'un nœud de carrosserie (1, 2) selon une des revendications 1 à 6, comprenant les étapes suivantes :
- fourniture d'une première structure de carrosserie (6, 4), d'une deuxième structure de carrosserie (8, 5) et d'une troisième structure de carrosserie (7), dans lequel la géométrie réelle y compris les dimensions réelles sont déterminées d'au moins une des structures de carrosserie (4, 5, 6, 7, 8, 9, 10) et la bride de liaison (13a à 13h) prévue pour la structure de carrosserie (4, 5, 6, 7, 8, 9, 10) est formée de manière générative de manière s'adapter à la géométrie réelle déterminée, y compris les dimensions réelles, en particulier conjointement avec le nœud de carrosserie (1, 2).
